# EUROPEAN PATENT APPLICATION

(11) **EP 4 250 410 A2**
(43) Date of publication of application: **27.09.2023**
(21) Application number: 22212423.2
(22) Date of filing: 09.12.2022
(51) Int. Cl.: H01M 8/1007

(54) **FUEL CELL SYSTEM**

(30) Priority: 09.12.2021 JP 2021200268
(71) Applicant: Kabushiki Kaisha Toshiba, Minato-ku Tokyo (JP); Toshiba Energy Systems & Solutions Corporation, Saiwai-ku Kawasaki-shi Kanagawa (JP)
(72) Inventor: Tanaka, Takayuki, Kawasaki-shi, Kanagawa (JP); Nagata, Yusaku, Kawasaki-shi, Kanagawa (JP)
(74) Representative: Hoffmann Eitle

(57) **Abstract**

A fuel cell system includes: a fuel cell stack that produces electricity using hydrogen and oxygen; a cooling-water discharge pipe connected to the fuel cell stack; and a cooling-water pump that discharges cooling water from the fuel cell stack through the cooling-water discharge pipe. During operation of the cooling-water pump, a pressure in the cooling-water discharge pipe, at least between the fuel cell stack and the cooling-water pump, is lower than the atmospheric pressure. A gas vent pipe is connected to the cooling-water discharge pipe between the fuel cell stack and the cooling-water pump, the gas vent pipe extending substantially vertically.

## Description

### FIELD

Embodiments described herein relate to a fuel cell system.

### BACKGROUND

A fuel cell stack has a stack body in which a plurality of unit cells is stacked. Flow paths for fuel gas, oxidant gas and cooling water are respectively formed in the stack body. The fuel cell stack produces electricity by an electrochemical reaction between fuel gas and oxidant gas introduced into the stack body. Cooling water for cooling the heated stack body is also introduced into the stack body. As shown in JP2014-049267A, the cooling water having cooled the stack body is discharged from the fuel cell stack using a cooling-water pump. The cooling-water pump is positioned downstream of the fuel cell stack in the flow direction of the cooling water.

The cooling water discharged from the fuel cell stack may contain bubbles. When the cooling water containing bubbles is introduced into the cooling-water pump, operation efficiency of the cooling-water pump may be decreased. Thus, the cooling water cannot be sufficiently supplied to the fuel cell stack, so that the fuel cell stack cannot be sufficiently cooled. If the fuel cell stack could not be sufficiently cooled, it may show deteriorated performance. In order to solve this problem, an air vent valve is installed in the inlet of the cooling-water pump in order to release bubbles in the cooling water to the atmosphere, thereby reducing bubbles to be introduced into the cooling-water pump.

However, when the pressure in the flow path for cooling water is lower than the atmospheric pressure, it is difficult to release the bubbles in the cooling water to the atmosphere by means of the air vent valve. Thus, a special pump must be needed as the cooling-water pump. Such a pump is expensive and increases an installation cost of the fuel cell system.

### BRIEF DESCRIPTION OF THE DRAWINGS

Fig. 1 is a view showing a structure of a fuel cell system according to one embodiment.
Fig. 2 is a view for explaining a flow of a fluid inside a fuel cell stack shown in Fig. 1.
Fig. 3 is a view showing a cross-sectional view of a stack body of the fuel cell stack shown in Fig. 2 taken along line III-III.
Fig. 4 is a flowchart for explaining a control method of the fuel cell system shown in Fig. 1.
Fig. 5 is a view for explaining an operation of a valve provided on a gas vent pipe.
Fig. 6 is a view for explaining the operation of the valve provided on the gas vent pipe.
Fig. 7 is a view for explaining the operation of the valve provided on the gas vent pipe.
Fig. 8 is a view for explaining the operation of the valve provided on the gas vent pipe.

### DETAILED DESCRIPTION

A fuel cell system according to an embodiment comprises:
a fuel cell stack that produces electricity using hydrogen and oxygen;
a cooling-water discharge pipe connected to the fuel cell stack; and
a cooling-water pump that discharges cooling water from the fuel cell stack through the cooling-water discharge pipe;
wherein:
   during operation of the cooling-water pump, a pressure in the cooling-water discharge pipe, at least between the fuel cell stack and the cooling-water pump, is lower than the atmospheric pressure; and
   a gas vent pipe is connected to the cooling-water discharge pipe between the fuel cell stack and the cooling-water pump, the gas vent pipe extending substantially vertically.

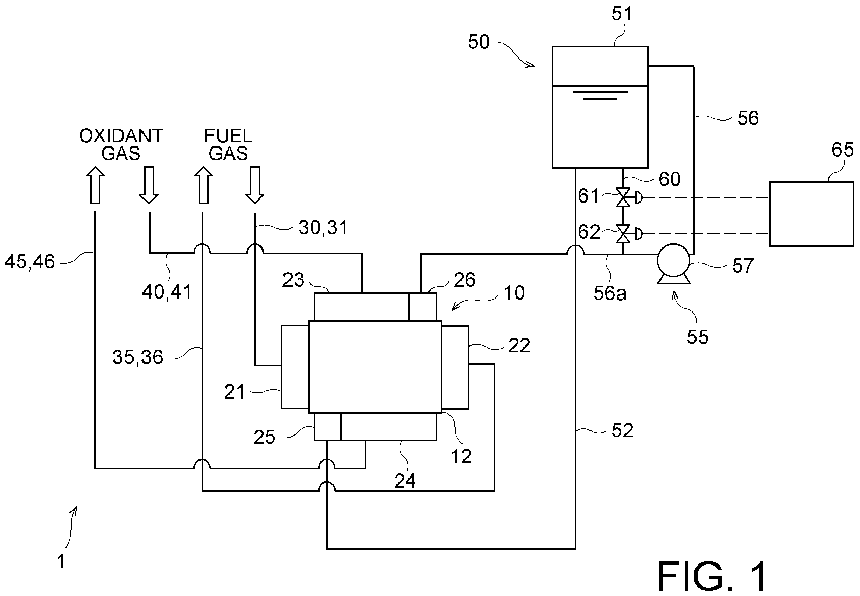

One embodiment is described hereunder with reference to the drawings. First, an overall structure of a fuel cell system is described with reference to Fig. 1.

As shown in Fig. 1, a fuel cell system 1 has a fuel cell stack 10, a fuel-gas supply system 30, a fuel-gas discharge system 35, an oxidant-gas supply system 40, an oxidant-gas discharge system 45, a cooling-water supply system 50, and a cooling-water discharge system 55. The fuel cell stack 10 produces electricity using hydrogen and oxygen. The fuel gas is hydrogen, and the oxidant gas is air.

The fuel-gas supply system 30 includes a fuel-gas supply source (not shown), such as a fuel gas tank, and a fuel-gas supply pipe 31. The fuel-gas supply pipe 31 connects the fuel-gas supply source and the fuel cell stack 10. The fuel-gas discharge system 35 includes a fuel-gas discharge pipe 36. One end of the fuel-gas discharge pipe 36 is connected to the fuel cell stack 10.

The oxidant-gas supply system 40 includes an oxidant-gas supply source (not shown), such as a blower, and an oxidant-gas supply pipe 41. The oxidant-gas supply pipe 41 connects the oxidant-gas supply source and the fuel cell stack 10. The oxidant-gas discharge system 45 includes an oxidant-gas discharge pipe 46. One end of the oxidant-gas discharge pipe 46 is connected to the fuel cell stack 10.

The cooling-water supply system 50 includes a cooling-water supply source 51 and a cooling-water supply pipe 52. The cooling-water supply pipe 52 connects the cooling-water supply source 51 and the fuel cell stack 10. In the illustrated example, the cooling-water supply source 51 is a cooling-water tank. The upper part of the cooling-water tank 51 is open to the atmosphere. The cooling-water supply pipe 52 is connected to the bottom of the cooling-water tank 51.

The cooling-water discharge system 55 includes a cooling-water discharge pipe 56 and a cooling-water pump 57. One end of the cooling-water discharge pipe 56 is connected to the fuel cell stack 10. In the illustrated example, the other end of the cooling-water discharge pipe 56 is connected to the upper part of the cooling-water tank 51. When the cooling-water pump 57 is activated, the pressure in the cooling-water discharge pipe 56 lowers, so that cooling water in the fuel cell stack 10 is discharged to the cooling-water tank 51 through the cooling-water discharge pipe 56.

In the example shown in Figs. 1 to 3, the fuel cell stack 10 is a polymer electrolyte fuel cell stack. The fuel cell stack 10 includes a plurality of unit cells 11, and manifolds 21, 22, 23, 24, 25 and 26.

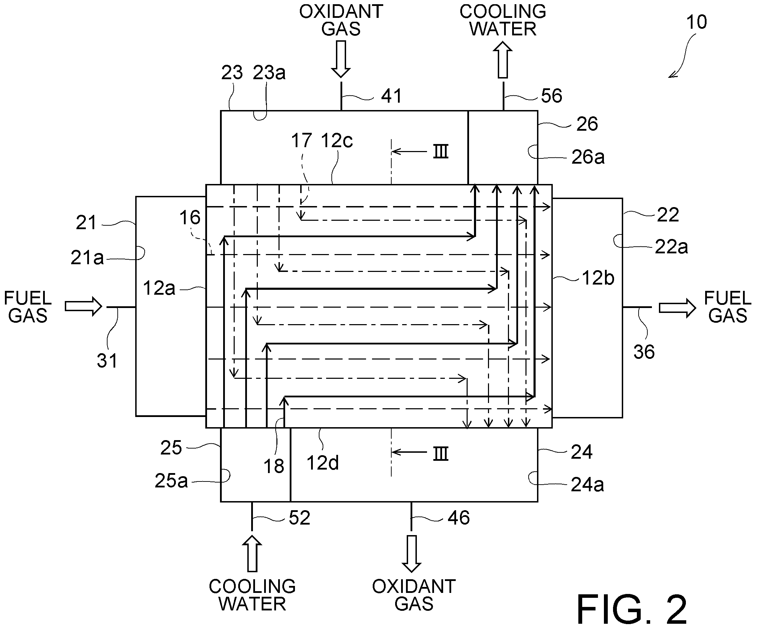

The unit cells 11 are stacked in a direction perpendicular to the sheet planes of Figs. 1 and 2 to constitute a stack body 12. The stack body 12 has a generally rectangular parallelepiped shape. The stack body 12 has a first surface 12a, a second surface 12b, a third surface 12c, and a fourth surface 12d, which spread along the stacking direction of the unit cells 11. The first surface 12a and the second surface 12b are opposed to each other. The third surface 12c and the fourth surface 12d are opposed to each other. The manifolds 21, 22, 23, 24, 25 and 26 are mounted on the surfaces 12a, 12b, 12c and 12d of the stack body 12.

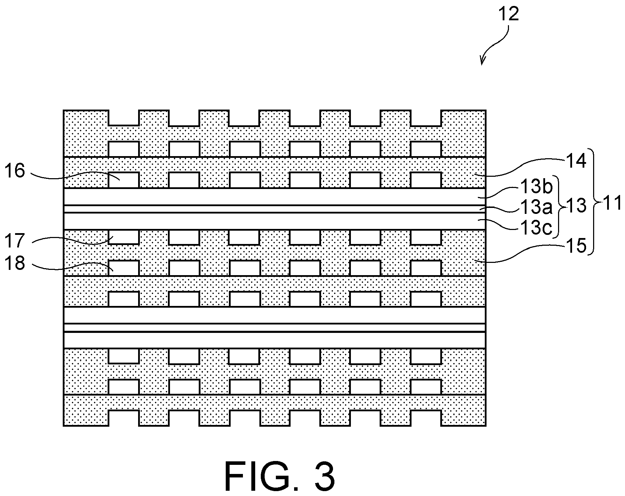

As shown in Fig. 3, each unit cell 11 includes a membrane electrode assembly (MEA) 13, and a fuel separator 14 and an oxidant separator 15 positioned either side of the membrane electrode assembly 13. The membrane electrode assembly 13 includes a polymer electrolyte membrane 13a, and a pair of electrodes (fuel electrode 13b and oxidant electrode 13c) positioned either side of the polymer electrolyte membrane 13a. The fuel separator 14 and the oxidant separator 15 are made of an electrically-conductive and porous material. The fuel separator 14 and the oxidant separator 15 may be, for example, electrically-conductive porous carbon plates.

The fuel separator 14 has a surface which is in contact with the membrane electrode assembly 13. On this surface, a fuel-gas flow path 16 is provided. One end of the fuel-gas flow path 16 opens into the first surface 12a of the stack body 12. The other end of the fuel-gas flow path 16 opens into the second surface 12b of the stack body 12.

The oxidant separator 15 has a surface which is in contact with the membrane electrode assembly 13. On this surface, an oxidant-gas flow path 17 is provided. One end of the oxidant-gas flow path 17 opens into the third surface 12c of the stack body 12. The other end of the oxidant-gas flow path 17 opens into the fourth surface 12d of the stack body 12.

On the other surface of the fuel separator 14, or on the other surface of the oxidant separator 15, a cooling-water flow path 18 is provided. In the illustrated example, the cooling-water flow path 18 is provided on the surface of the oxidant separator 15. One end of the cooling-water flow path 18 opens into the fourth surface 12d of the stack body 12. The other end of the cooling-water flow path 18 opens into the third surface 12c of the stack body 12.

The fuel-gas supply manifold 21 is mounted on the first surface 12a of the stack body 12. The internal space 21a of the fuel-gas supply manifold 21 is in fluid communication with the one end of the fuel-gas flow path 16. The fuel-gas supply pipe 31 is connected to the fuel-gas supply manifold 21 so that fuel gas is introduced into the internal space 21a through the fuel-gas supply pipe 31.

The fuel-gas discharge manifold 22 is mounted on the second surface 12b of the stack body 12. The internal space 22a of the fuel-gas discharge manifold 22 is in fluid communication with the other end of the fuel-gas flow path 16. The fuel-gas discharge pipe 36 is connected to the fuel-gas discharge manifold 22 so that fuel gas in the internal space 22a is discharged to the outside of the fuel cell stack 10 through the fuel-gas discharge pipe 36.

The oxidant-gas supply manifold 23 is mounted on the third surface 12c of the stack body 12. The internal space 23a of the oxidant-gas supply manifold 23 is in fluid communication with the one end of the oxidant-gas flow path 17. The oxidant-gas supply pipe 41 is connected to the oxidant-gas supply manifold 23 so that oxidant gas is introduced into the internal space 23a through the oxidant-gas supply pipe 41.

The oxidant-gas discharge manifold 24 is mounted on the fourth surface 12d of the stack body 12. The internal space 24a of the oxidant-gas discharge manifold 24 is in fluid communication with the other end of the oxidant-gas flow path 17. The oxidant-gas discharge pipe 46 is connected to the oxidant-gas discharge manifold 24 so that oxidant gas in the internal space 24a is discharged to the outside of the fuel cell stack 10 through the oxidant-gas discharge pipe 46.

The cooling-water supply manifold 25 is mounted on the fourth surface 12d of the stack body 12. The internal space 25a of the cooling-water supply manifold 25 is in fluid communication with the one end of the cooling-water flow path 18. The cooling water supply pipe 52 is connected to the cooling-water supply manifold 25 so that cooling water is introduced into the internal space 25a through the cooling-water supply pipe 52.

The cooling-water discharge manifold 26 is mounted on the third surface 12c of the stack body 12. The internal space 26a of the cooling-water discharge manifold 26 is in fluid communication with the other end of the cooling-water flow path 18. The cooling-water discharge pipe 56 is connected to the cooling-water discharge manifold 26 so that cooling water in the internal space 26a is discharged to the outside of the fuel cell stack 10 through the cooling-water discharge pipe 56.

Fig. 2 shows the flow of the fuel gas, the flow of the oxidant gas, and the flow of the cooling water in the fuel cell stack 10 by means of dashed line arrows, dash-dotted line arrows, and solid line arrows, respectively. As shown in Fig. 2, the fuel gas is supplied from the fuel-gas supply pipe 31 to the stack body 12 through the internal space 21a of the fuel-gas supply manifold 21. The fuel gas supplied to the stack body 12 is introduced into the fuel-gas flow path 16 of each unit cell 11. The oxidant gas is supplied from the oxidant-gas supply pipe 41 to the stack body 12 through the internal space 23a of the oxidant-gas supply manifold 23. The oxidant gas supplied to the stack body 12 is introduced into the oxidant-gas flow path 17 of each unit cell 11. Then, hydrogen in the fuel gas and oxygen in the oxidant gas react in the unit cells 11, so that electricity and water are produced. The fuel gas discharged from the fuel-gas flow path 16 flows into the fuel-gas discharge pipe 36 through the fuel-gas discharge manifold 22. The oxidant gas discharged from the oxidant-gas flow path 17 flows into the oxidant-gas discharge pipe 46 though the oxidant-gas discharge manifold 24.

The cooling water is supplied from the cooling-water supply pipe 52 to the stack body 12 through the cooling-water supply manifold 25. The cooling water supplied to the stack body 12 is introduced to the cooling-water flow path 18 of each unit cell 11 to cool the unit cell 11. The cooling water discharged from the cooling-water flow path 18 flows into the cooling-water discharge pipe 56 through the cooling-water discharge manifold 26.

The illustrated fuel cell system 1 is configured such that, when the cooling-water pump 57 is activated, the pressure in the cooling-water discharge pipe 56, at least between the fuel cell stack 10 and the cooling-water pump 57, becomes lower than the atmospheric pressure. Thus, in the fuel cell stack 10, the pressure in the cooling-water flow path 18 becomes sufficiently lower than the pressures in the fuel-gas flow path 16 and the oxidant-gas flow path 17. As a result, the risk of the cooling water in the cooling flow path 18 leaking to the fuel-gas flow path 16 or the oxidant-gas flow path 17 can be effectively reduced. In addition, the aforementioned pressure difference causes water produced at the oxidant electrode 13c to move from the oxidant electrode 13c to the cooling-water flow path 18 through a porous gas diffusion layer and the separator so as to be removed from the fuel cell stack 10.

The cooling water discharged from the fuel cell stack may contain bubbles. When the cooling water containing bubbles is introduced into the cooling-water tank, operation efficiency of the cooling-water pump may be decreased. Thus, the cooling water cannot be sufficiently supplied to the fuel cell stack, so that the fuel cell stack cannot be sufficiently cooled. If the fuel cell stack is not cooled sufficiently, the fuel cell may show deteriorated performance. In order to solve this problem, it is known to provide the cooling water inlet of the cooling-water pump with an air vent valve to release bubbles in the cooling water to the atmosphere, thereby reducing bubbles to be introduced into the cooling-water pump.

However, when the pressure in the flow path for cooling water is lower than the atmospheric pressure, the air vent valve is not useful for releasing the bubbles in the cooling water to the atmosphere and a special pump is required as the cooling-water pump in order to release the bubbles to the atmosphere. However, such a pump is expensive and increases the installation cost of the fuel cell system.

In consideration of these circumstances, the fuel cell system 1 in this embodiment is designed to make it possible to remove bubbles (air) from the cooling water, even when the pressure in the cooling-water discharge pipe 56 is lower than the atmospheric pressure.

Specifically, a gas vent pipe 60 is connected to the cooling-water discharge pipe 56. The gas vent pipe 60 is connected to the cooling-water discharge pipe 56 at a position between the fuel cell stack 10 and the cooling-water pump 57. The gas vent pipe 60 extends substantially vertically. The lower end of the gas vent pipe 60 is connected to the cooling-water discharge pipe 56. Through the gas vent pipe 60, bubbles in the cooling water flowing inside the cooling-water discharge pipe 56 can be released from the cooling-water discharge system 55.

In the illustrated example, the cooling-water discharge pipe 56 extends substantially horizontally in a part connected to the gas vent pipe 60. In other words, the cooling-water discharge pipe 56 has a horizontal part 56a which extends substantially horizontally between the fuel cell stack 10 and the cooling-water pump 57. The gas vent pipe 60 is connected to the horizontal part 56a. Bubbles in the cooling water flowing inside the cooling-water discharge pipe 56 tend to move toward the upper side of the horizontal part 56a of the cooling-water discharge pipe 56. The gas vent pipe 60 is connected to the upper side of the horizontal part 56a. Thus, bubbles in the cooling water flowing inside the horizontal part 56a can be efficiently trapped in the gas vent pipe 60.

In addition, the cross-sectional area of the cooling-water discharge pipe 56 is determined such that the cross-sectional area of the cooling-water discharge pipe 56 at the part connected to the gas vent pipe 60 is larger than the cross-sectional area of the cooling-water discharge pipe 56 at a part connected to the fuel cell stack 10. This causes the velocity of the cooling water flowing from the fuel cell stack 10 into the cooling-water discharge pipe 56 to be reduced at the part of the cooling-water discharge pipe 56 connected to the gas vent pipe 60. As a result, more bubbles move upward at this connection part. This allows more bubbles in the cooling water to be trapped in the gas vent pipe 60.

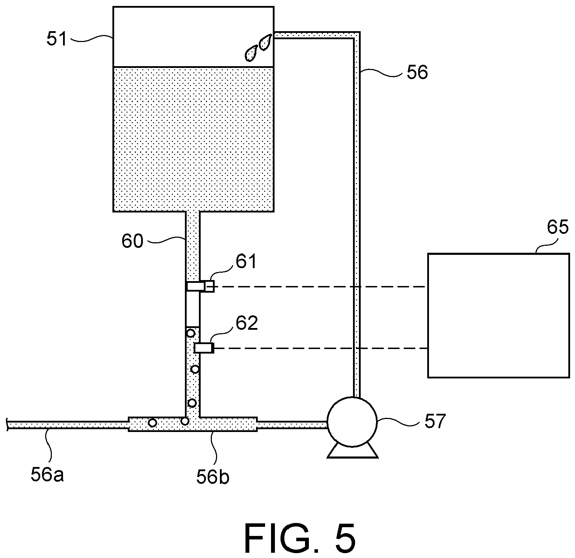

In the illustrated example, the horizontal part 56a has a expanded part 56b (see Figs. 5 to 8). The cross-sectional area of the expanded part 56b is larger than the cross-sectional area of the other part of the cooling-water discharge pipe 56. The gas vent pipe 60 is connected to the upper side of the expanded part 56b.

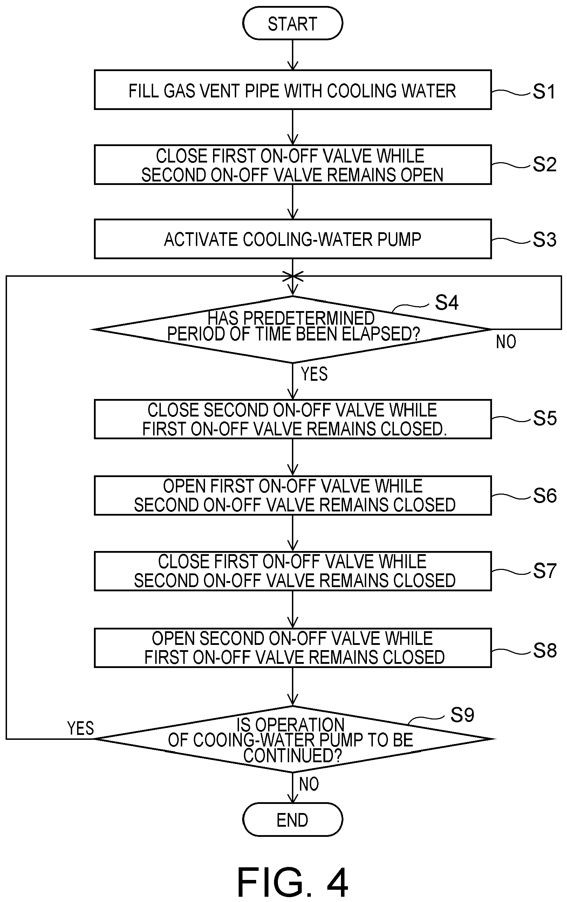

The cooling-water tank 51 is positioned above the gas vent pipe 60. The upper end of the gas vent pipe 60 is connected to the bottom of the cooling-water tank 51. The gas vent pipe 60 is provided with a first on-off valve 61 between the lower end of the gas vent pipe 60 and the upper end thereof. In addition, the gas vent pipe 60 is provided with a second on-off valve 62 between the lower end of the gas vent pipe 60 and the first on-off valve 61. The first on-off valve 61 is positioned above the second on-off valve 62. Since the fuel cell system 1 has such a gas vent pipe 60 and such on-off valves 61, 62, bubbles in the cooling water flowing inside the cooling-water discharge pipe 56 can be efficiently discharged through the gas vent pipe 60. Specifically, bubbles in the cooling water flowing inside the cooling-water discharge pipe 56 can be efficiently discharged through the gas vent pipe 60, by controlling the first on-off valve 61 and the second on-off valve 62 in accordance with the control method described with reference to Figs. 4 to 8. In the illustrated example, the fuel cell system 1 has a control device 65 that controls the first on-off valve 61 and the second on-off valve 62.

The first on-off valve 61 and the second on-off valve 62 can be any type of valve as long as they can shut/open the gas vent pipe 60 as needed. The first on-off valve 61 and the second on-off valve 62 may be solenoid valves, for example.

The control method of the fuel cell system 1 is described with reference to Figs. 4 to 8. The following description focuses on the control method of the first on-off valve 61 and the second on-off valve 62. In Figs. 5 to 8, illustration of the cooling-water supply pipe 52 is omitted for simplicity of illustration.

When starting the operation of the fuel cell system 1 to produce electricity, the first on-off valve 61 and the second on-off valve 62 are opened first, in response to a control signal from the control device 65. Thus, the cooling water in the cooling-water tank 51 flows into the gas vent pipe 60 to fill the gas vent pipe 60 (step S1 in Fig. 4).

Next, as shown in Fig. 5, the first on-off valve 61 is closed while the second on-off valve 62 remains open, in response to a control signal from the control device 65 (step S2 in Fig. 4). This prevents the part of the gas vent pipe 60 below the first on-off valve 61 from being affected by the atmospheric pressure through the cooling-water tank 51. Hereunder, the state in which the first on-off valve 61 is closed and the second on-off valve 62 is open is referred to also as "first state".

Next, supply of the fuel gas, the oxidant gas and the cooling water to the fuel cell stack 10 is started. The cooling water is supplied to the fuel cell stack 10 by operating the cooling-water pump 57 to lower the pressure in the cooling-water discharge pipe 56. In the illustrated example, the pressure in the cooling-water discharge pipe 56, at least between the fuel cell stack 10 and the cooling-water pump 57, is made lower than the atmospheric pressure. Thus, the pressure in the cooling-water flow path 18 in the fuel cell stack 10 is also sufficiently lowered, so that the cooling water is supplied from the cooling-water tank 51 to the cooling-water flow path 18. In addition, the cooling water in the fuel cell stack 10 is discharged to the cooling-water discharge pipe 56. Then, the cooling water flowing inside the cooling-water discharge pipe 56 is discharged to the cooling-water tank 51 through the cooling-water pump 57. In this manner, the cooling water circulates through the cooling-water supply system 50, the fuel cell stack 10 and the cooling-water discharge system 55.

Bubbles in the cooling water flowing inside the cooling-water discharge pipe 56 move upward in the cooling-water discharge pipe 56, so that they are trapped in the gas vent pipe 60 opening to the cooling-water discharge pipe 56. The bubbles trapped in the gas vent pipe 60 accumulate in the space delimited by the first on-off valve 61 and the second on-off valve 62.

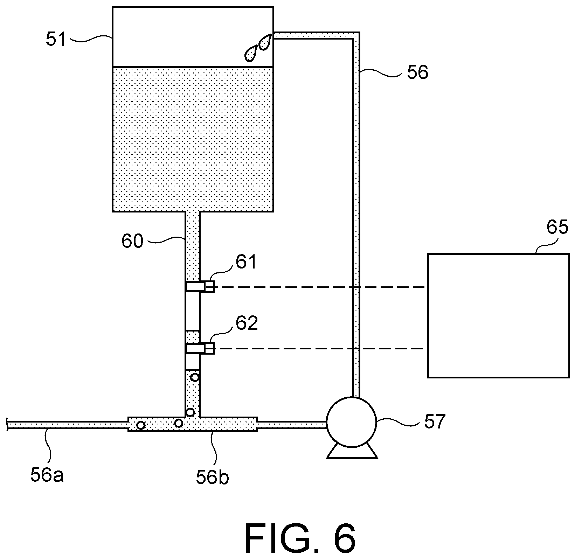

Next, when a predetermined period of time has elapsed since the first on-off valve 61 and the second on-off valve 62 were put into the first state and a certain amount of gas has accumulated in the gas vent pipe 60 (YES in step S4 in Fig. 4), the second on-off valve 62 is closed while the second on-off valve 61 remains closed, in response to a control signal from the control device 65 as shown in Fig. 6 (step S5). The above predetermined period of time may be a time length during which the gas accumulated in the air vent pipe 60 is within a certain amount. For example, the predetermined period of time may be a time length that the amount of the gas accumulated in the gas vent pipe 60 is within the capacity of the space delimited by the first on-off valve 61 and the second on-off valve 62. Hereunder, the state in which both the first on-off valve 61 and the second on-off valve 62 are closed is referred to also as "intermediate state".

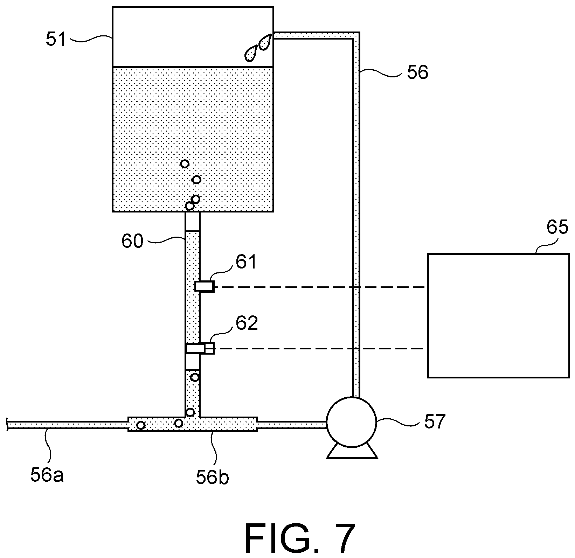

Next, as shown in Fig. 7, the first on-off valve 61 is opened while the second on-off valve 62 remains closed, in response to a control signal from the control device 65 (step S6). This causes the gas (bubbles) trapped in the space delimited by the first on-off valve 61 and the second on-off valve 62 to move upward, so that the gas is released to the cooling-water tank 51, and at the same time, the cooling water in the cooling-water tank 51 is introduced into the part of the air vent pipe 60 above the second on-off valve 62. Since the second on-off valve 62 is closed while the first on-off valve 61 is open, the part of the gas vent pipe 61 below the second on-off valve 62 is prevented from being affected by the atmospheric pressure through the cooling-water tank 51. Thus, bubbles in the cooling water flowing inside the cooling-water discharge pipe 56 are continuously trapped in the gas vent pipe 60. Hereunder, the state in which the first on-off valve 61 is open while the second on-off valve 62 is closed is referred to also as "second state".

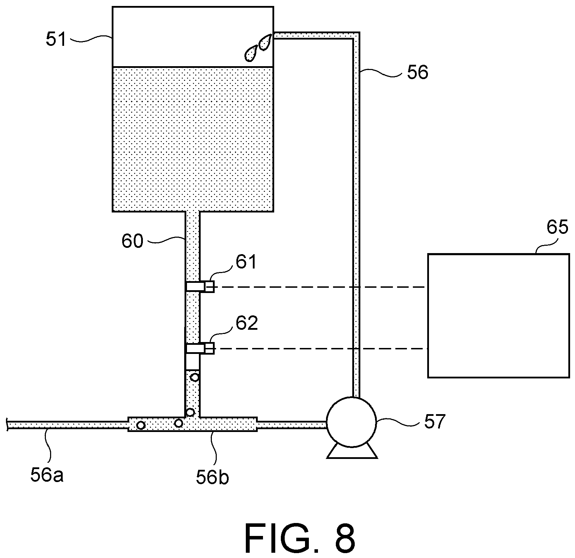

Next, as shown in Fig. 8, the first on-off valve 61 is closed while the second on-off valve 62 remains closed, in response to a control signal from the control device 65 (step S7). Namely, the first on-off valve 61 and the second on-off valve 62 are put into the intermediate state.

Next, as shown in Fig. 5, the second on-off valve 62 is opened while the first on-off valve 61 remains closed, in response to a control signal from the control device 62 (step S8). Namely, the first on-off valve 61 and the second on-off valve 62 are put into the first state. Since the first on-off valve 61 remains closed while the second on-off valve 62 is open, the part of the gas vent pipe 61 below the first on-off valve 61 is prevented from being affected by the atmospheric pressure through the cooling-water tank 51. Thus, bubbles in the cooling water flowing inside the cooling-water discharge pipe 56 are continuously trapped in the gas vent pipe 60. The bubbles (gas) trapped in the gas vent pipe 60 accumulate in the space delimited by the first on-off valve 61 and the second on-off valve 62.

When the operation of the fuel cell system 1 is continued to produce electricity, the supply of the fuel gas, the oxidant gas and the cooling water to the fuel cell stack 10 is continued. Thus, the operation of the cooling-water pump 57 is continued. When the operation of the cooling-water pump 57 is continued in step S9 (YES in step S9), the operation of the fuel battery system 1 returns to step S4 and the control of the first on-off valve 61 and the second on-off valve 62 is continued.

On the other hand, when the operation of the fuel battery system 1 for producing electricity is ended, the supply of the fuel gas, the oxidant gas and the cooling water to the fuel cell stack 10 is stopped. Thus, the operation of the cooling-water pump 57 is stopped. When the operation of the cooling-water pump 57 is stopped, no more cooling water is introduced into the cooling-water pump 57. Thus, when the operation of the cooling-water pump 57 is not continued in the step S9 (NO in step S9), the control of the first on-off valve 61 and the second on-off valve 62 is ended.

In addition, when the predetermined period of time has not elapsed in step S4 (NO in step S4), the operation of the fuel battery system 1 returns to step S4.

In the aforementioned embodiment, the separator 15 provided with the cooling-water flow path 18 is made of a porous material, but the present disclosure is not limited thereto. The separator 15 provided with the cooling-water flow path 18 may be made of a material that does not allow water to pass therethrough, such as a metal plate. This case may also have a problem similar to the aforementioned problem, because the pressure in the cooling-water discharge pipe 56 is made lower than the atmospheric pressure in order to suppress leakage of the cooling water from the cooling-water supply system 50 and the cooling-water discharge system 55.

In the aforementioned embodiment, the first on-off valve 61 and the second on-off valve 62 are put into the intermediate state after a predetermined period of time has elapsed since they were put into the first state, but the present disclosure is not limited thereto. The first on-off valve 61 and the second on-off valve 62 may be put into the intermediate state after a predetermined amount of gas has accumulated in the gas vent pipe 60 since they were put into the first state. In this case, a liquid level gauge or level sensor (or level switch) may be provided on the gas vent pipe 60, and the switching from the first state into the intermediate state may be performed based on a measurement result obtained from the liquid level gauge or level sensor.

In the aforementioned embodiment, the control of the first on-off valve 61 and the second on-off valve 62 is performed using the control device 65, but the present disclosure is not limited thereto. The first on-off valve 61 and the second on-off valve 62 may be controlled manually.

In the aforementioned embodiment, the upper end of the gas vent pipe 60 is connected to the cooling-water tank 51 included in the cooling-water supply system 50, but the present disclosure is not limited thereto. The upper end of the gas vent pipe 60 may be connected to a water tank different from the cooling-water tank 51 of the cooling-water supply system 50. When the gas vent pipe 60 is connected to the cooling-water tank 51 of the cooling-water supply system 50, it is possible to make the fuel cell system 1 smaller as compared with a case in which the gas vent pipe 60 is connected to a water tank different from the cooling-water tank 51.

As described above, the fuel cell system 1 according to this embodiment comprises the fuel cell stack 10 that produces electricity using hydrogen and oxygen, the cooling-water discharge pipe 56 connected to the fuel cell stack 10, and the cooling-water pump 57 that discharges cooling water from the fuel cell stack 10 through the cooling-water discharge pipe 56. During the operation of the cooling-water pump 57, the pressure in the cooling-water discharge pipe 56, at least between the fuel cell stack 10 and the cooling-water pump 57, is lower than the atmospheric pressure. The gas vent pipe 60, which extends substantially vertically, is connected to the cooling-water discharge pipe 56 between the fuel cell stack 10 and the cooling-water pump 57. Such a fuel cell system 1 can discharge bubbles in the cooling water flowing inside the cooling-water discharge pipe 56 through the gas vent pipe 60, before the cooling water is introduced into the cooling-water pump 57.

In the fuel cell system 1 according to this embodiment, the cooling-water discharge pipe 56 extends substantially horizontally at the part connected to the gas vent pipe 60. The gas vent pipe 60 is connected to the upper side of the cooling-water discharge pipe 56. This allows bubbles in the cooling water flowing inside the cooling-water discharge pipe 56 to be efficiently discharged through the gas vent pipe 60.

In the fuel cell system 1 according to this embodiment, the cross-sectional area of the cooling-water discharge pipe 56 at the part connected to the gas vent pipe 60 is larger than the cross-sectional area of the cooling-water discharge pipe 56 at the part connected to the fuel cell stack 10. This allows more bubbles in the cooling water flowing inside the cooling-water discharge pipe 56 to be discharged through the gas vent pipe 60.

In the fuel cell system 1 according to this embodiment, the lower end of the gas vent pipe 60 is connected to the cooling-water discharge pipe 56. In addition, the upper end of the gas vent pipe 60 is connected to the cooling-water tank 51. In addition, the gas vent pipe 60 is provided with the first on-off valve 61 and the second on-off valve 62. The first on-off 61 is provided between the lower end of the gas vent pipe 60 and the upper end thereof. The second on-off valve 62 is provided between the lower end of the gas vent pipe 60 and the first on-off valve 61. Since the fuel cell system 1 has such a gas vent pipe 60 and such on-off valves 61, 62, bubbles in the cooling water flowing inside the cooling-water discharge pipe 56 can be efficiently discharged through the gas vent pipe 60.

Specifically, bubbles in the cooling water flowing inside the cooling water discharge pipe 56 are removed by causing the first on-off valve 61 and the second on-off valve 62 to transition from the first state in which the first on-off valve 61 is closed and the second on-off valve 62 is open, to the second state in which the first on-off valve 61 is open and the second on-off valve 62 is closed, via the intermediate state in which both the first on-off valve 61 and the second on-off valve 62 are closed.

The fuel cell system 1 according to this embodiment further comprises the cooling-water supply pipe 52 having one end connected to the fuel cell stack 10 and the other end connected to the cooling-water tank 51. In other words, the gas vent pipe 60 is connected to the cooling-water tank 51 of the cooling-water supply system 50. In this case, it is possible to make the fuel cell system 1 smaller as compared with a case in which the gas vent pipe 60 is connected to a water tank different from the cooling-water tank 51.

In the fuel cell system 1 according to this embodiment, the first on-off valve 61 and the second on-off valve 62 are maintained in the first state for a predetermined period of time, and then switched to the intermediate state. This can prevent the gas accumulated in the gas vent pipe 60 from becoming excessive.

Alternatively, in the fuel cell system 1 according to this embodiment, the first on-off valve 61 and the second on-off valve 62 are maintained in the first state until a predetermined amount of gas accumulates between the lower end of the gas bent pipe 60 and the first on-off valve 61, and then switched to the intermediate state. This can also prevent the gas accumulated in the gas vent pipe 60 from becoming excessive.

In the fuel cell system 1 according to this embodiment, the fuel cell stack 10 includes the membrane electrode assembly 13 including the polymer electrolyte membrane 13a, and the fuel electrode 13b and the oxidant electrode 13c positioned either side of the polymer electrolyte membrane 13a. The fuel cell stack 10 also includes the fuel separator 14 and the oxidant separator 15 positioned either side of the membrane electrode assembly 13. One surface of the fuel separator 14 is provided with the fuel-gas flow path 16. One surface of the oxidant separator 15 is provided with the oxidant-gas flow path 17. The other surface of the fuel separator 14 or the oxidant separator 15 is provided with the cooling-water flow path 18. The separator provided with the cooling-water flow path 18 is made of a porous material. In such a fuel cell system 1, the pressure in the cooling-water discharge pipe 56 is made lower than the atmospheric pressure. Then, in the fuel cell stack 10, the pressure in the cooling-water flow path 18 becomes sufficiently lower than the pressure in the fuel-gas flow path 16 or the oxidant-gas flow path 17. As a result, the risk of the cooling water in the cooling flow path 18 leaking to the fuel-gas flow path 16 or the oxidant-gas flow path 17 can be effectively reduced. In addition, the aforementioned pressure difference causes water produced at the oxidant electrode 13c to move from the oxidant electrode 13c to the cooling-water flow path 18 through the porous gas diffusion layer and the separator so as to be removed from the fuel cell stack 10.

The fuel cell system according to this embodiment makes it possible to vent air from the cooling water, even when the pressure in the flow path for cooling water is lower than the atmospheric pressure.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the sprit of the inventions. The accompanying claims and their equivalents are intended to cover such forms or modifications as would fail within the scope and spirit of the invention.

## Claims

1. A fuel cell system comprising:
a fuel cell stack that produces electricity using hydrogen and oxygen;
a cooling-water discharge pipe connected to the fuel cell stack; and
a cooling-water pump that discharges cooling water from the fuel cell stack through the cooling-water discharge pipe;
wherein:
during operation of the cooling-water pump, a pressure in the cooling-water discharge pipe, at least between the fuel cell stack and the cooling-water pump, is lower than the atmospheric pressure; and
a gas vent pipe is connected to the cooling-water discharge pipe between the fuel cell stack and the cooling-water pump, the gas vent pipe extending substantially vertically.

2. The fuel cell system according to claim 1, wherein:
the cooling-water discharge pipe extends substantially horizontally in a part connected to the gas vent pipe; and
the gas vent pipe is connected to an upper side of the cooling-water discharge pipe.

3. The fuel cell system according to claim 1 or 2, wherein:
a lower end of the gas vent pipe is connected to the cooling-water discharge pipe;
an upper end of the gas vent pipe is connected to a cooling-water tank; and
the gas vent pipe is provided with a first on-off valve and a second on-off valve;
the first on-off valve is provided between the lower end of the gas vent pipe and the upper end thereof; and
the second on-off valve is provided between the lower end of the gas vent pipe and the first on-off valve.

4. The fuel cell system according to claim 3, further comprising a cooling-water supply pipe having one end connected to the fuel cell stack and the other end connected to the cooling-water tank.

5. The fuel cell system according to claim 3 or 4, wherein
bubbles in cooling water flowing inside the cooling-water discharge pipe are removed by causing the first on-off valve and the second on-off valve to transition from a first state in which the first on-off valve is closed and the second on-off valve is open, to a second state in which the first on-off valve is open and the second on-off valve is closed, via an intermediate state in which both the first on-off valve and the second on-off valve are closed.

6. The fuel cell system according to claim 5, wherein
the first on-off valve and the second on-off valve are maintained in the first state for a predetermined period of time, and then switched to the intermediate state.

7. The fuel cell system according to claim 5, wherein
the first on-off valve and the second on-off valve are maintained in the first state until a predetermined amount of gas accumulates between the lower end of the gas vent pipe and the first on-off valve, and then switched to the intermediate state.

8. The fuel cell system according to any one of claims 3 to 7, further comprising a control unit that controls the opening and the closing of the first on-off valve and the second on-off valve.

9. The fuel cell system according to any one of claims 1 to 8, wherein:
the fuel cell stack includes:
a membrane electrode assembly including a polymer electrolyte membrane, and a fuel electrode and an oxidant electrode positioned either side of the polymer electrolyte membrane; and
a fuel separator and an oxidant separator positioned either side of the membrane electrode assembly;
wherein:
a fuel-gas flow path is provided on one surface of the fuel separator;
an oxidant-gas flow path is provided on one surface of the oxidant separator;
a cooling-water flow path is provided on the other surface of the fuel separator or the oxidant separator; and
the separator provided with the cooling-water flow path is made of a porous material.
